# EUROPEAN PATENT SPECIFICATION

(11) **EP 2 635 540 B1**
(45) Date of publication and mention of the grant of the patent: **19.09.2018**
(21) Application number: 11785826.6
(22) Date of filing: 21.10.2011
(51) Int. Cl.: C03C 21/00, C03C 23/00

(54) **ENHANCED STRENGTHENING OF GLASS**
ERHÖHTE GLASVERSTÄRKUNG
RENFORCEMENT AMÉLIORÉ DU VERRE

(30) Priority: 14.05.2011 US 201113107906; 04.11.2010 US 410290 P
(43) Date of publication of application: 11.09.2013
(73) Proprietor: Apple Inc., Cupertino CA 95014 (US)
(72) Inventor: PREST, Christopher, Cupertino, CA 95014 (US)
(74) Representative: Gillard, Matthew Paul
(86) International application number: PCT/US2011/057388
(87) International publication number: WO 2012/061049

(56) References cited:
- AT-B- 283 630
- DE-A1- 1 771 268
- US-A1- 2010 028 607
- DATABASE WPI Week 198103 Thomson Scientific, London, GB; AN 1981-02868D XP002667463, -& JP 55 144450 A (DAINI SEIKOSHA KK) 11 November 1980 (1980-11-11)

## Description

### BACKGROUND OF THE INVENTION

Conventionally, some portable electronic devices use glass as a part of their devices, either internal or external. Externally, a glass part can be provided as part of a housing, such a glass part is often referred to as a cover glass. The transparent and scratch-resistance characteristics of glass make it well suited for such applications. Internally, glass parts can be provided to support display technology. More particularly, for supporting a display, a portable electronic device can provide a display technology layer beneath an outer cover glass. A sensing arrangement can also be provided with or adjacent the display technology layer. By way of example, the display technology layer may include or pertain to a Liquid Crystal Display (LCD) that includes a Liquid Crystal Module (LCM). The LCM generally includes an upper glass sheet and a lower glass sheet that sandwich a liquid crystal layer therebetween. The sensing arrangement may be a touch sensing arrangement such as those used to create a touch screen. For example, a capacitive sensing touch screen can include substantially transparent sensing points or nodes dispersed about a sheet of glass.

Unfortunately, however, use of glass with portable electronic devices requires that the glass be relatively thin. Generally speaking, the thinner the glass the more susceptible the glass is to damage when the portable electronic device is stressed or placed under a significant force. Chemically strengthening has been used to strengthen glass. While chemically strengthening is effective, there is a continuing need to provide improved ways to strengthen glass, namely, thin glass.

JP55144450 discloses a watch cover glass that is fixed in a fixture, supported at the periphery of glass bottom face, and is pressed at the center section of the top surface. This applies compressive stress on the top surface and tensile stress on the bottom face. The so fixed glass is preheated, dipped into molten salt and held there, then cooled in air, washed with water to remove KNO3, is dried, and removed from the fixture. In this process, tensile stress in the glass bottom face allows faster ion-exchange rate than that in no stressed condition. This results in more of potassium ions exchanged with sodium ions and produces compressive stress higher at the bottom than the top surface, in condition the glass is removed from the fixture after chemical reinforcing process.

DE1771268 relates to a process for bending glass of any shape.

AT283630 relates to a method for producing bent and tempered glass sheets, in which ions of the surface layers of the sheets are replaced by other ions.

### SUMMARY

The invention relates generally to techniques for improving chemical strengthening of glass. The invention provides a method and system according to the appended claims.

### Brief Description of the Drawings

The invention will be readily understood by the following detailed description in conjunction with the accompanying drawings, wherein like reference numerals designate like structural elements, and in which:
FIG. 1 is a flow diagram of a glass strengthening process according to one embodiment.
FIG. 2 illustrates a glass strengthening system according to one embodiment.
FIG. 3A is a flow diagram of a glass piece process according to one embodiment.
FIG. 3B is a flow diagram of a glass piece process according to another embodiment.
FIG. 4 illustrates a glass strengthening system according to another embodiment.
FIG. 5 is a flow diagram of a back exchange process according to one embodiment.
FIGS. 6A and 6B are diagrammatic representations of electronic device according to one embodiment.
FIGS. 7A and 7B are diagrammatic representations of electronic device according to another embodiment of the invention.
FIG. 8 illustrates a process of chemically treating surfaces of a glass piece in accordance with one embodiment.
FIG. 9A is a cross-sectional diagram of a glass cover which has been chemically treated such that a chemically strengthened layer is created according to one embodiment.
FIG. 9B is a cross-sectional diagram of a glass cover which has been chemically treated, as shown to include a chemically treated portion in which potassium ions have been implanted according to one embodiment.
FIG. 10 is a diagrammatic representation of a chemical treatment process that involves submerging a glass cover in an ion bath according to one embodiment.

### DETAILED DESCRIPTION OF EMBODIMENTS OF THE INVENTION

The invention relates generally to techniques for improving chemical strengthening of glass. In one embodiment, a mechanical stress can be induced on a glass article while undergoing chemical strengthening. In another embodiment, vibrations, such as ultrasonic vibrations, can be induced during chemical strengthening of a glass article. The use of mechanical stress and/or vibrations during chemically strengthening of a glass article can enhance the effectiveness of the chemical strengthening process. Accordingly, glass articles that have undergone chemical strengthening processing are able to be not only thin but also sufficiently strong and resistant to damage. The strengthened glass articles are well suited for use in consumer products, such as consumer electronic devices (e.g., portable electronic devices).

Embodiments of the invention can relate to apparatus, systems and methods for improving strength of a thin glass member for a consumer product, such as a consumer electronic device. In one embodiment, the glass member may be an outer surface of a consumer electronic device. For example, the glass member may, for example, correspond to a glass cover that helps form part of a display area of the electronic device (i.e., situated in front of a display either as a separate part or integrated within the display). As another example, the glass member may form a part of a housing for the consumer electronic device (e.g., may form an outer surface other than in the display area). In another embodiment, the glass member may be an inner component of a consumer electronic device. For example, the glass member can be a component glass piece of a LCD display provided internal to the housing of the consumer electronic device.

The apparatus, systems and methods for improving strength of thin glass are especially suitable for glass covers or displays (e.g., LCD displays), particularly those assembled in small form factor electronic devices such as handheld electronic devices (e.g., mobile phones, media players, personal digital assistants, remote controls, etc.). The glass can be thin in these small form factor embodiments, such as less than 3 mm, or more particularly between 0.3 and 2.5 mm. The apparatus, systems and methods can also be used for glass covers or displays for other devices including, but not limited to including, relatively larger form factor electronic devices (e.g., portable computers, tablet computers, displays, monitors, televisions, etc.). The glass can also be thin in these larger form factor embodiments, such as less than 5 mm, or more particularly between 0.3 and 3 mm.

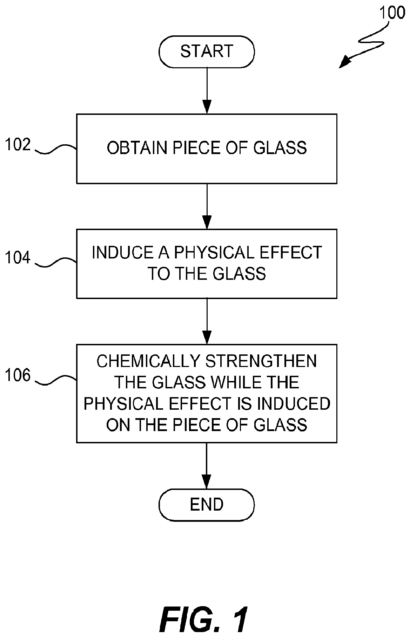

Embodiments of the invention are discussed below with reference to FIGs. 1 - 10. However, those skilled in the art will readily appreciate that the detailed description given herein with respect to these figures is for explanatory purposes as the invention extends beyond these limited embodiments. The illustrations provided in these figures are not necessarily drawn to scale; instead, the illustrations are presented in a manner to facilitate presentation.

FIG. 1 is a flow diagram of a glass strengthening process 100 according to one embodiment. The glass strengthening process 100 serves to chemically strengthen a piece of glass such that it is better suited for its particular usage.

The glass strengthening process 100 can induce 104 a physical effect to the glass. In one example, the physical effect can pertain to a mechanical stress imposed on at least a portion of the glass. In another example, the physical effect can pertain to a mechanical vibration, such as an ultrasonic vibration, imposed on at least a portion of the glass.

As the physical effect is induced 104 in the glass, the glass can be chemically strengthened 106. In one implementation, the glass can be chemically strengthened 106 through chemical processing. Specifically, the glass can be placed in a potassium solution so that potassium ions from the potassium solution can be exchanged for sodium ions within the glass.

By inducing 104 the physical effect while the glass is being chemically strengthened 106, the glass can be chemically strengthened 106 in an enhanced manner. More specifically, the presence of the physical effect can allow the glass to be strengthened 106 to a greater extent. Following block 106, the piece of glass has been chemically strengthened. Due to the physical effect provided to the glass, the glass is able to be chemically strengthened to a greater extent. Following the chemical strengthening 106, the glass strengthening process 100 can end.

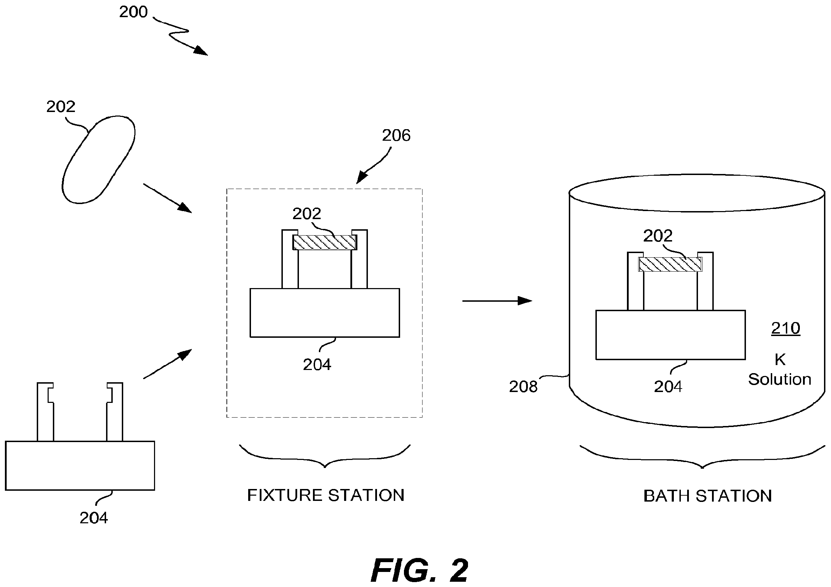

FIG. 2 illustrates a glass strengthening system 200 according to one embodiment. The glass strengthening system 200 receives a glass article 202 to be strengthened through chemical processing. The glass strengthening system 200 also provides a fixture 204. The glass article 202 and the fixture 204 are provided to a fixture station 206. At the fixture station 206, the glass article 202 can be secured by or to the fixture 204. In one embodiment, the fixture station is configured to provide a physical effect to the glass article. In one example, the physical effect can pertain to a mechanical stress imposed on at least a portion of the glass article. In another example, the physical effect can pertain to a mechanical vibration, such as an ultrasonic vibration, imposed on at least a portion of the glass article.

The fixture 204 having the glass article 202 secured thereto can then be inserted (e.g., immersed) into a bath 208 provided at a bath station. The bath 208 can include an Alkali metal solution, such as a potassium solution 210. At the bath station, ion exchange occurs between the glass article 202 and the potassium solution 210. Later, upon completion of chemical strengthening, the fixture 204 having the glass article 202 can be removed from the bath 208. At this point, the glass article 202 has been chemically strengthened. Since the fixture 204 is able to induce a physical effect, the glass article 202 is able to be chemically strengthened to a greater extent than would otherwise have been determined if the glass article were not subjected to the physical effect.

Furthermore, following removal of the fixture 204 having the glass article 202 from the bath 208, the glass article 202 can be removed from the fixture 204. Thereafter, to the extent desired, post-processing can be performed on the glass article 202. Post-processing can vary widely dependent on intended application for the glass article. However, post-processing can, for example, include one or more of rinsing, polishing, annealing and the like.

The potassium solution 210 within the bath 208 can heated to a predetermined temperature, and the fixture 204 having the glass article 202 can be immersed within the bath 208 for a predetermined period of time. The degree of chemically strengthening provided by the bath 208 to the glass article 202 is dependent on: (1) type of glass, (2) concentration of bath (e.g., K concentration), (3) time in the second bath 208, and (4) temperature of the bath 208.

In one implementation, the glass for the glass article can, for example, be alumina silicate glass or soda lime glass. Also, it should be noted that glass from different suppliers, even if the same type of glass, can have different properties and thus may require different values. The time for the glass article 202 to remain immersed in the bath 208 can be about 6-20 hours and the temperature for the bath 208 can be about 300 - 500 degrees Celsius.

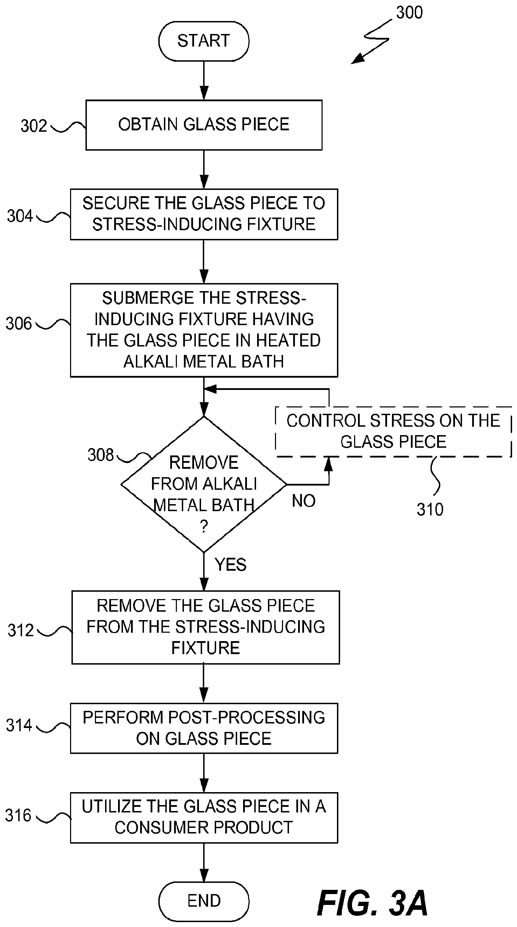

FIG. 3A is a flow diagram of a glass piece process 300 according to one embodiment. The glass piece process 300 serves to process a piece of glass such that may be more suitable for subsequent use in a consumer product.

The glass piece process 300 initially obtains 302 a piece of glass. The glass piece can then be secured 304 to a stress-inducing fixture. The stress-inducing fixture can hold one or more pieces of glass and impose a stress, e.g., a load, on the one or more pieces of glass. For example, the load can place one portion of a piece of glass under added tension while another portion is under added compression. Additionally, it should be noted that the stress being imposed can be directed to specific areas of the piece of glass, such as edges of the glass. For example, increased strengthening of edges via chemical strengthening can be obtained by inducing stress at the edges of the piece of glass.

Next, the stress-inducing fixture having the glass piece can be submerged 306 into a heated Alkali metal bath. For example, the heated Alkali metal bath can be a heated potassium bath. A decision 308 can then determine whether the glass piece should be removed from the heated Alkali metal bath. The heated Alkali metal bath can, for example, be maintained at a predetermined temperature and the stress-inducing fixture along with the glass piece can be submerged within the heated Alkali metal bath for a predetermined period of time. If the decision 308 determines that the stress-inducing fixture along with glass piece are not to be removed from the Alkali metal bath, then the stress being induced on the glass piece can optionally be controlled 310. Here, if the stress induced by the stress-inducing fixture is to be static, then the stress imposed on the glass piece can be applied and remain in place while the glass piece remains in the Alkali metal bath. On the other hand, the stress imposed on the glass piece can be applied in a dynamic manner while the glass piece remains in the Alkali metal bath. The dynamic stress can be controlled 310 by a control system so that the stress applied can vary in amount (or degree), position, and/or duration.

Once the decision 308 determines that the glass piece is to be removed from the Alkali metal bath, the stress-inducing fixture along with glass piece are removed from the Alkali metal bath. The glass piece can then be removed 312 from the stress-inducing fixture. Thereafter, post-processing on the glass piece can be performed 314. The post-processing can vary depending upon application. For example, the post-processing can include one or more of: polishing, grinding, heating, annealing, cleaning and the like for the glass piece. Typically, the post-processing is performed 314 on the glass piece to make the glass piece more suitable for its intended usage.

Following the performing 314 of the post-processing, the glass piece can be utilized 316 in a consumer product. The glass piece can be used as an outer portion of a housing for the consumer product, or can be used as an internal component (e.g., LCD glass panel) glass piece. For example, the consumer product can be a consumer electronics product, such as a portable electronic device. Following the block 316, the glass piece process 300 can end.

The predetermined period of time during which the glass piece is submerged 306 in the heated Alkali bath (e.g., heated potassium bath) can vary depending on implementation and intended use. For example, the glass piece can be immersed in a heated potassium bath at a temperature of about 300 - 500 degrees Celsius for a predetermined amount of time of about 6-20 hours.

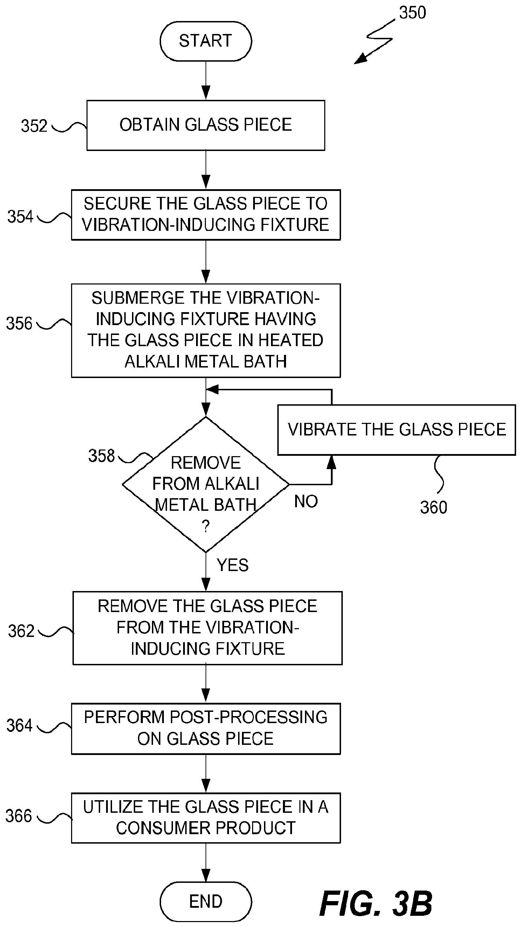

FIG. 3B is a flow diagram of a glass piece process 350 according to another embodiment. The glass piece process 350 serves to process a piece of glass such that may be more suitable for subsequent use in a consumer product.

The glass piece process 350 initially obtains 352 a piece of glass. The glass piece can then be secured 354 to a vibration-inducing fixture. The vibration-inducing fixture can induce a vibration to the glass piece or otherwise for processing the glass piece. The vibration can, for example, be ultrasonic vibration. It should be noted that the vibration being imposed can be applied to the entire glass piece or can be directed to specific areas of the piece of glass, such as edges of the glass. For example, by inducing vibration to some or all of the glass piece can result in increased strengthening of some or all of the glass piece via chemical strengthening.

The vibration-inducing fixture having the glass piece can be submerged 356 into a heated Alkali metal bath. For example, the heated Alkali metal bath can be a heated potassium bath. A decision 358 can then determine whether the glass piece should be removed from the heated Alkali metal bath. The heated Alkali metal bath can, for example, be maintained at a predetermined temperature and the vibration-inducing fixture along with the glass piece can be submerged within the heated Alkali metal bath for a predetermined period of time. If the decision 358 determines that the vibration-inducing fixture along with glass piece are not to be removed from the Alkali metal bath, then the vibration being induced on the glass piece can be controlled 360. Here, if the vibration induced by the vibration-inducing fixture is to be static, then the vibration imposed on the glass piece can be applied and remain while the glass piece remains in the Alkali metal bath. For example, the vibration can be imposed for at least a predetermined amount of time that the glass piece is in the Alkali metal bath. On the other hand, the vibration imposed on the glass piece can be applied in a dynamic manner while the glass piece remains in the Alkali metal bath. The dynamic vibration can be controlled 360 by a control system so that the vibration applied can vary in amount (or degree), position, and/or duration.

Once the decision 358 determines that the glass piece is to be removed from the Alkali metal bath, the vibration-inducing fixture along with glass piece are removed from the Alkali metal bath. The glass piece can then be removed 362 from the vibration-inducing fixture. Thereafter, post-processing on the glass piece can be performed 364. The post-processing can vary depending upon application. For example, the post-processing can include one or more of: polishing, grinding, heating, annealing, cleaning and the like for the glass piece. Typically, the post-processing is performed 364 on the glass piece to make the glass piece more suitable for its intended usage.

Following the performing 364 of the post-processing, the glass piece can be utilized 366 in a consumer product. The glass piece can be used as an outer portion of a housing for the consumer product, or can be used as an internal component (e.g., LCD glass panel) glass piece. For example, the consumer product can be a consumer electronics product, such as a portable electronic device. Following the block 366, the glass piece process 350 can end.

The predetermined period of time during which the glass piece is submerged 356 in the heated Alkali bath (e.g., heated potassium bath) can vary depending on implementation and intended use. For example, the glass piece can be immersed in a heated potassium bath at a temperature of about 300 - 500 degrees Celsius for a predetermined amount of time of about 6-20 hours.

According to another embodiment, glass processing can further include an additional bath. The additional bath can be provided to provide a small amount of back exchange of ions at the surfaces of a glass piece (glass article). The back exchange can serve to exchange Alkali metal ions (e.g., potassium ions) from the glass piece for sodium ions. This back exchange process can be useful to more a compressive maximum inward from the outer edges (10-70 micrometers) as defects or cracks proximate the edges reside slightly inward from the edges and may be weak points that render the glass piece more susceptible to causing damage to the glass member.

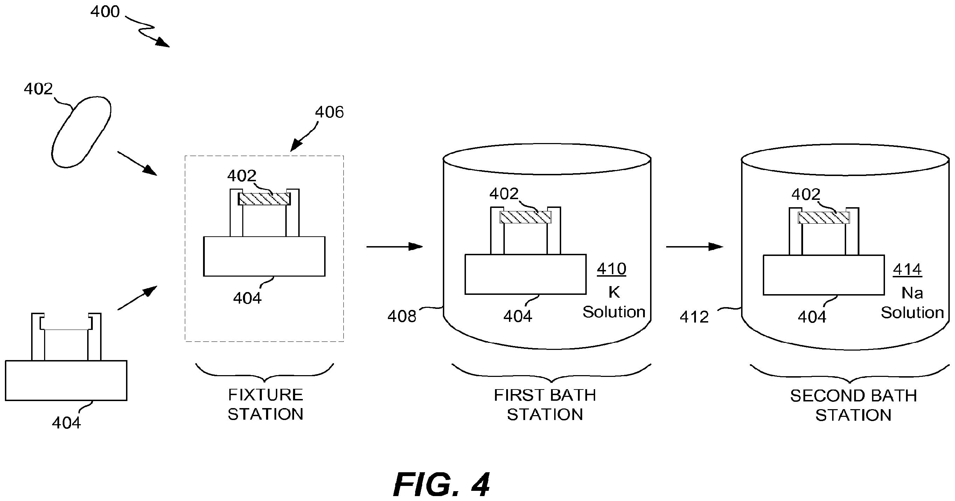

FIG. 4 illustrates a glass strengthening system 400 according to another embodiment. The glass strengthening system 400 receives a glass article 402 to be strengthened through chemical processing. The glass strengthening system 400 also provides a fixture 404. The glass article 402 and the fixture 404 are provided to a fixture station 406. At the fixture station 406, the glass article 402 can be secured by or to the fixture 404. In one embodiment, the fixture station is configured to provide a physical effect to the glass article. In one example, the physical effect can pertain to a mechanical stress imposed on at least a portion of the glass article. In another example, the physical effect can pertain to a mechanical vibration, such as an ultrasonic vibration, imposed on at least a portion of the glass article.

The fixture 404 having the glass article 402 secured thereto can then be inserted (e.g., immersed) into a bath 408 provided at a first bath station. The bath 408 can include an Alkali metal solution, such as a potassium solution 410. At the first bath station, ion exchange occurs between the glass article 402 and the potassium solution 410, which implements chemical strengthening to outer surface of the glass article 402. Later, upon completion of chemical strengthening, the fixture 404 having the glass article 402 can be removed from the bath 408. At this point, the glass article 402 has been chemically strengthened. Since the fixture 404 is able to induce a physical effect, the glass article 402 is able to be chemically strengthened to a greater extent than would otherwise have been determined if the glass article were not subjected to the physical effect.

The potassium solution 410 within the bath 408 can heated to a predetermined temperature, and the fixture 404 having the glass article 402 can be immersed within the bath 408 for a predetermined period of time. The degree of chemically strengthening provided by the bath 408 to the glass article 402 is dependent on: (1) type of glass, (2) concentration of bath (e.g., K concentration), (3) time in the second bath 408, and (4) temperature of the bath 408.

Additionally, after the fixture 404 having the glass article 402 has been removed from the bath 408, the fixture 404 having the glass article 202 can be provided to a second bath station where a bath 412 is provided. The glass article 402 can be inserted (e.g., immersed) into the bath 412 which includes a sodium solution 414. Here, Alkali metal ions (e.g., potassium ions) from the glass article 402 exchange with sodium ions in the sodium solution 414. This can be referred to as a back exchange because some ions previously exchanged with the glass article are effectively unexchanged or returned. Subsequently, the glass article 402 is removed from the bath 412.

The sodium solution 414 within the bath 412 can heated to a predetermined temperature, and the glass article 402 can be immersed within the bath 412 for a predetermined period of time. The predetermined period of time for use with the bath 408 can be the same or different than the predetermined period of time for use with the bath 412. Typically, the predetermined period of time for use with the bath 412 is substantially less than the predetermined period of time for use with the bath 408.

Furthermore, following removal of the fixture 404 having the glass article 402 from the bath 412, the glass article 402 can be removed from the fixture 404. Thereafter, to the extent desired, post-processing can be performed on the glass article 402. Post-processing can vary widely dependent on intended application for the glass article. However, post-processing can, for example, include one or more of rinsing, polishing, annealing and the like.

In one implementation, the glass for the glass article 402 can, for example, be alumina silicate glass or soda lime glass. Glass from different suppliers, even if the same type of glass, can have different properties and thus may require different values. The time for the glass article 402 to remain immersed in the bath 408 can be about 6-20 hours and the temperature for the bath 408 can be about 300 - 500 degrees Celsius. The bath 412 can be a sodium (Na) bath or a sodium nitrate (NaNO3) bath, in either case with a sodium concentration of 30% - 100% mol. The time for the glass article 402 to remain immersed in the bath 412 can be about 1-30 minutes and the temperature for the bath 412 can be about 350 - 450 degrees Celsius.

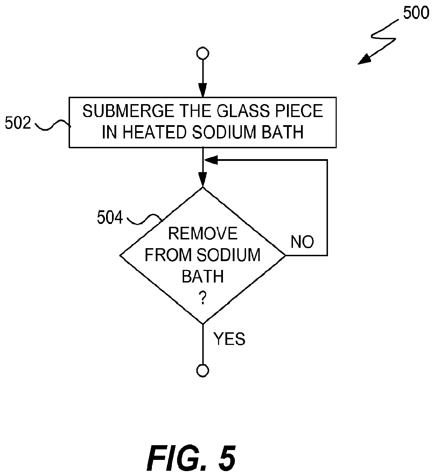

FIG. 5 is a flow diagram of a back exchange process 500 according to one embodiment. The back exchange process 500 provides additional, optional processing that can be used with the glass piece process 300 illustrated in FIG. 3A or the glass piece process 350 illustrated in FIG. 3B. For example, the back exchange process 500 can be optionally used following block 308 and prior to block 312 of the glass piece process 300, or the back exchange process 500 can be optionally used following block 358 and prior to block 362 of the glass piece process 350.

The back exchange process 500 provides an additional bath for providing back exchange of sodium into the glass piece. According to the back exchange process 500, the glass piece can be submerged 502 into a heated sodium bath. A decision 504 can then determine whether the glass piece should be removed from the heated sodium bath. For example, the heated sodium bath can be maintained at a predetermined temperature and the glass piece can be submerged within the heated sodium bath for a predetermined period of time. As an example, the decision 504 can determine that the glass piece should be removed from the heated sodium bath after the glass piece has been immersed in the heated sodium bath for the predetermined amount of time.

Once the decision 504 determines that the glass piece is to be removed from the heated sodium bath, the processing of the glass piece can then return to perform removal 312 of the glass piece from the stress-inducing fixture as well as pre-processing at block 314 and subsequent operations of the glass piece process 300 illustrated in FIG. 3A, or alternatively perform removal 362 of the glass piece from the vibration-inducing fixture as well as pre-processing at block 364 and subsequent operations of the glass piece process 350 illustrated in FIG. 3B.

In the back exchange process 500, the heated sodium bath can be heated to a predetermined temperature, and the glass piece can be immersed within the heated sodium bath for a predetermined period of time. The extent of the back exchange fir the glass piece can be dependent on: (1) type of glass, (2) concentration of bath (e.g., Na concentration), (3) time in the sodium bath, and (4) temperature of the sodium bath. In one implementation, the glass for the glass piece can, for example, be alumina silicate glass or soda lime glass. Also, glass from different suppliers, even if the same type of glass, can have different properties and thus may require different values. The heated sodium bath can be a sodium (Na) bath or a sodium nitrate (NaNO3) bath, in either case with a sodium concentration of 30% - 100% mol. The predetermined period of time for the glass piece to remain immersed in the heated sodium bath for back exchange can be about 1-30 minutes and the temperature for the heated sodium bath can be about 350 - 450 degrees Celsius.

As previously discussed, glass covers can be used as an outer surface of portions of a housing for electronic devices, such as portable electronic devices. Those portable electronic devices that are small and highly portable can be referred to as handheld electronic devices. A handheld electronic device may, for example, function as a media player, phone, internet browser, email unit or some combination of two or more of such. A handheld electronic device generally includes a housing and a display area.

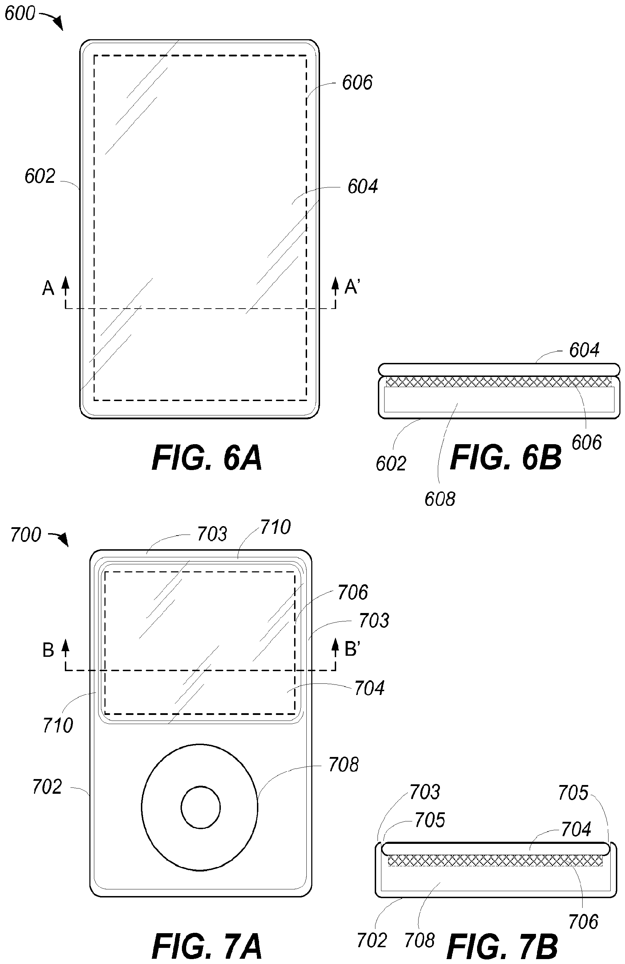

FIGs. 6A and 6B are diagrammatic representations of electronic device 600 according to one embodiment. FIG. 6A illustrates a top view for the electronic device 600, and FIG. 6B illustrates a cross-sectional side view for electronic device 600 with respect to reference line A-A'. Electronic device 600 can include housing 602 that has glass cover window 604 (glass cover) as a top surface. Cover window 604 is primarily transparent so that display assembly 606 is visible through cover window 604. Cover window 604 can be chemically strengthened using the chemical strengthening processing described herein. Display assembly 606 can, for example, be positioned adjacent cover window 604. Housing 602 can also contain internal electrical components besides the display assembly, such as a controller (processor), memory, communications circuitry, etc. Display assembly 606 can, for example, include a LCD module. By way of example, display assembly 606 may include a Liquid Crystal Display (LCD) that includes a Liquid Crystal Module (LCM). In one embodiment, cover window 604 can be integrally formed with the LCM. Housing 602 can also include an opening 608 for containing the internal electrical components to provide electronic device 600 with electronic capabilities. In one embodiment, housing 602 may need not include a bezel for cover window 604. Instead, cover window 604 can extend across the top surface of housing 602 such that the edges of cover window 604 can be aligned (or substantially aligned) with the sides of housing 602. The edges of cover window 604 can remain exposed. Although the edges of cover window 604 can be exposed as shown in FIGs. 6A and 6B, in alternative embodiment, the edges can be further protected. As one example, the edges of cover window 604 can be recessed (horizontally or vertically) from the outer sides of housing 602. As another example, the edges of cover window 604 can be protected by additional material placed around or adjacent the edges of cover window 604.

Cover window 604 may generally be arranged or embodied in a variety of ways. By way of example, cover window 604 may be configured as a protective glass piece that is positioned over an underlying display (e.g., display assembly 606) such as a flat panel display (e.g., LCD) or touch screen display (e.g., LCD and a touch layer). Alternatively, cover window 604 may effectively be integrated with a display, *i.e.,* glass window may be formed as at least a portion of a display. Additionally, cover window 604 may be substantially integrated with a touch sensing device such as a touch layer associated with a touch screen. In some cases, cover window 604 can serve as the outer most layer of the display.

FIGs. 7A and 7B are diagrammatic representations of electronic device 700 according to another embodiment of the invention. FIG. 7A illustrates a top view for electronic device 700, and FIG. 7B illustrates a cross-sectional side view for electronic device 700 with respect to reference line B-B'. Electronic device 700 can include housing 702 that has glass cover window 704 (glass cover) as a top surface. Cover window 704 can be chemically strengthened using the chemical strengthening processing described herein. In this embodiment, cover window 704 can be protected by side surfaces 703 of housing 702. Here, cover window 704 does not fully extend across the top surface of housing 702; however, the top surface of side surfaces 703 can be adjacent to and aligned vertically with the outer surface of cover window 704. Since the edges of cover window 704 can be rounded for enhanced strength, there may be gaps 705 that are present between side surfaces 703 and the peripheral edges of cover window 704. Gaps 705 are typically very small given that the thickness of cover window 704 is thin (e.g., less than 3 mm). However, if desired, gaps 705 can be filled by a material. The material can be plastic, rubber, metal, etc. The material can conform in gap 705 to render the entire front surface of electronic device 700 flush, even across gaps 705 proximate the peripheral edges of cover window 704. The material filling gaps 705 can be compliant. The material placed in gaps 705 can implement a gasket. By filling the gaps 705, otherwise probably undesired gaps in the housing 702 can be filled or sealed to prevent contamination (e.g., dirt, water) forming in the gaps 705. Although side surfaces 703 can be integral with housing 702, side surface 703 could alternatively be separate from housing 702 and, for example, operate as a bezel for cover window 704.

Cover window 704 is primarily transparent so that display assembly 706 is visible through cover window 704. Display assembly 706 can, for example, be positioned adjacent cover window 704. Housing 702 can also contain internal electrical components besides the display assembly, such as a controller (processor), memory, communications circuitry, etc. Display assembly 706 can, for example, include a LCD module. By way of example, display assembly 706 may include a Liquid Crystal Display (LCD) that includes a Liquid Crystal Module (LCM). In one embodiment, cover window 704 is integrally formed with the LCM. Housing 702 can also include an opening 708 for containing the internal electrical components to provide electronic device 700 with electronic capabilities.

The front surface of electronic device 700 can also include user interface control 708 (e.g., click wheel control). In this embodiment, cover window 704 does not cover the entire front surface of electronic device 700. Electronic device 700 essentially includes a partial display area that covers a portion of the front surface.

Cover window 704 may generally be arranged or embodied in a variety of ways. By way of example, cover window 704 may be configured as a protective glass piece that is positioned over an underlying display (e.g., display assembly 706) such as a flat panel display (e.g., LCD) or touch screen display (e.g., LCD and a touch layer). Alternatively, cover window 704 may effectively be integrated with a display, *i.e.,* glass window may be formed as at least a portion of a display. Additionally, cover window 704 may be substantially integrated with a touch sensing device such as a touch layer associated with a touch screen. In some cases, cover window 704 can serve as the outer most layer of the display.

As noted above, the electronic device can be a handheld electronic device or a portable electronic device. The invention can serve to enable a glass cover to be not only thin but also adequately strong. Since handheld electronic devices and portable electronic devices are mobile, they are potentially subjected to various different impact events and stresses that stationary devices are not subjected to. As such, the invention is well suited for implementation of glass surfaces for handheld electronic device or a portable electronic device that are designed to be thin.

The strengthened glass, e.g., glass covers or cover windows, is particularly useful for thin glass applications. For example, the thickness of a glass cover being strengthen can be between about 0.5 - 2.5 mm. In other embodiments, the strengthening is suitable for glass products whose thickness is less than about 2 mm, or even thinner than about 1 mm, or still even thinner than about 0.6 mm.

Chemically strengthening glass, e.g., glass covers or cover windows, can be more effective for edges of glass that are rounded by a predetermined edge geometry having a predetermined curvature (or edge radius) of at least 10% of the thickness applied to the corners of the edges of the glass. In other embodiments, the predetermined curvature can be between 20% to 50% of the thickness of the glass.

In one embodiment, the size of the glass cover depends on the size of the associated electronic device. For example, with handheld electronic devices, the size of the glass cover is often not more than five (5) inches (about 12.7 cm) diagonal. As another example, for portable electronic devices, such as smaller portable computers or tablet computers, the size of the glass cover is often between four (4) (about 10.2 cm) to twelve (12) inches (about 30.5 cm) diagonal. As still another example, for portable electronic devices, such as full size portable computers, displays (including televisions) or monitors, the size of the glass cover is often between ten (10) (about 25.4 cm) to twenty (20) inches (about 50.8 cm) diagonal or even larger.

However, it should be appreciated that with larger screen sizes, the thickness of the glass layers may need to be greater. The thickness of the glass layers may need to be increased to maintain planarity of the larger glass layers. While the displays can still remain relatively thin, the minimum thickness can increase with increasing screen size. For example, the minimum thickness of the glass cover can correspond to about 0.3 mm for small handheld electronic devices, about 0.5 mm for smaller portable computers or tablet computers, about 1.0 mm or more for full size portable computers, displays or monitors, again depending on the size of the screen. However, more generally, the thickness of the glass cover can depend on the application and/or the size of electronic device.

As discussed above, glass cover or, more generally, a glass piece may be chemically treated such that surfaces of the glass are effectively strengthened. Through such strengthening, glass pieces can be made stronger so that thinner glass pieces can be used with consumer electronic device. Thinner glass with sufficient strength allows for consumer electronic device to become thinner.

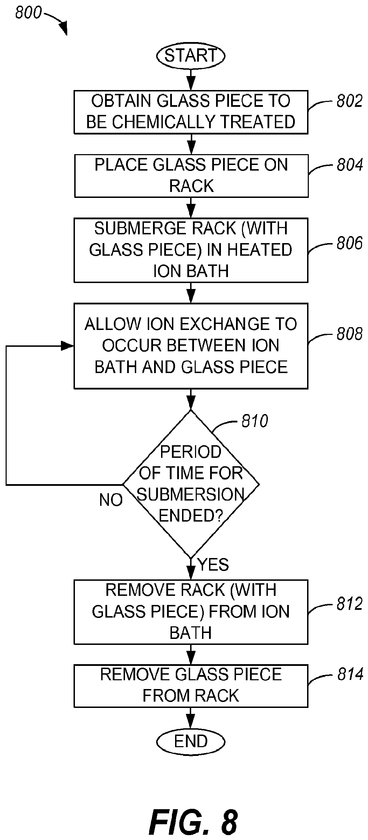

FIG. 8 illustrates a process 800 of chemically treating surfaces of a glass piece in accordance with one embodiment. The process 800 can represent processing associated with chemical strengthening at a bath station, such as an Alkali metal bath (e.g., potassium bath) as discussed above, according to one embodiment. The process 800 of chemically treating surfaces, e.g., edges, of a glass piece can begin at step 802 in which the glass piece is obtained. The glass piece may be obtained, in one embodiment, after a glass sheet is singulated into glass pieces, e.g., glass covers, and the edges of the glass pieces are manipulated to have a predetermined geometry. It should be appreciated, however, that a glass piece that is to be chemically treated may be obtained from any suitable source.

In step 804, the glass piece can be placed on a rack. The rack is typically configured to support the glass piece, as well as other glass pieces, during chemical treatment. Once the glass piece is placed on the rack, the rack can be submerged in a heated ion bath in step 806. The heated ion bath may generally be a bath which includes a concentration of ions (e.g., Alkali metal ions, such as Lithium, Cesium or Potassium). It should be appreciated that the concentration of ions in the bath may vary, as varying the concentration of ions allows compression stresses on surfaces of the glass to be controlled. The heated ion bath may be heated to any suitable temperature to facilitate ion exchange.

After the rack is submerged in the heated ion bath, a physical effect can be induced in step 808 and an ion exchange is allowed to occur in step 810 between the ion bath and the glass piece held on the rack. The physical effect can be implemented by the rack. A diffusion exchange occurs between the glass piece, which generally includes Na⁺ ions, and the ion bath. During the diffusion exchange, Alkali metal ions, which are larger than Na⁺ ions, effectively replace the Na⁺ ions in the glass piece. In general, the Na⁺ ions near surface areas of the glass piece may be replaced by the Alkali ions, while Na⁺ ions are essentially not replaced by Alkali ions in portions of the glass which are not surface areas. As a result of the Alkali ions replacing Na⁺ ions in the glass piece, a compressive layer is effectively generated near the surface of the glass piece. The Na⁺ ions which have been displaced from the glass piece by the Alkali metal ions become a part of the ion solution. Additionally, the physical effect being induced at step 808 can serve to increase the ion exchange between the ion bath and the glass piece. As a first example, in one embodiment, the physical effect can pertain to stress imposed on the glass piece. As a second example, in another embodiment, the physical effect can pertain to vibration imposed on the glass piece or the ion bath.

A determination can be made in step 812 as to whether a period of time for submerging the rack in the heated ion bath has ended. It should be appreciated that the amount of time that a rack is to be submerged may vary widely depending on implementation. Typically, the longer a rack is submerged, i.e., the higher the exchange time for Alkali metal ions and Na⁺ ions, the deeper the depth of the chemically strengthened layer. For example, with thickness of the glass sheet being on the order of 1 mm, the chemical processing (i.e., ion exchange) provided in the ion bath can be provide into the surfaces of the glass pieces 10 micrometers or more. For example, if the glass pieces are formed from soda lime glass, the depth of the compression layer due to the ion exchange can be about 10 micrometers. As another example, if the glass pieces are formed from alumino silicate glass, the depth of the compression layer due to the ion exchange can be about 50 micrometers.

If the determination in step 812 is that the period of time for submerging the rack in the heated ion bath has not ended, then process 800 flow can return to step 810 in which the chemical reaction is allowed to continue to occur between the ion bath and the glass piece. Alternatively, if it is determined that the period of time for submersion has ended, then the physical effect being induced can be ceased in step 814 and the rack can be removed from the ion bath in step 816. Upon removing the rack from the ion bath, the glass piece may be removed from the rack in step 818, and the process 800 of chemically treating surfaces of a glass piece can be completed. However, if desired, the glass piece can be polished. Polishing can, for example, remove any haze or residue on the glass piece following the chemical treatment.

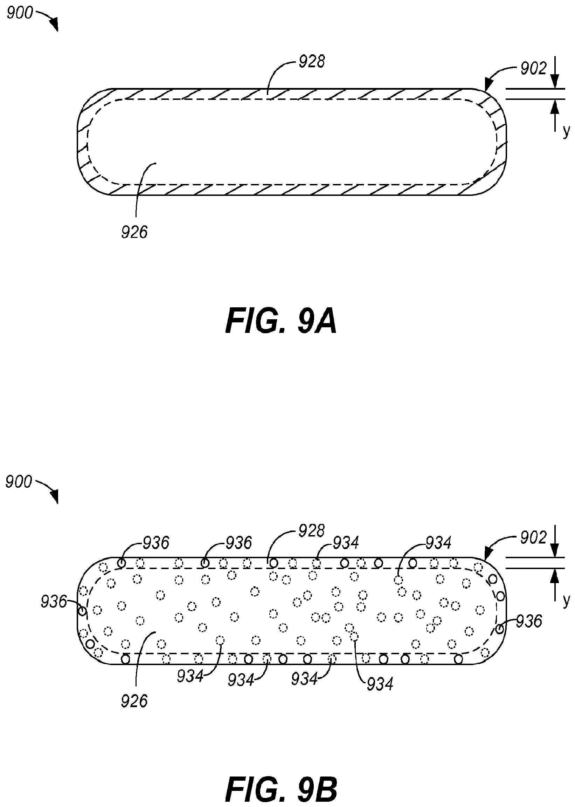

A glass cover which has undergone a chemical strengthening process generally includes a chemically strengthened layer, as previously mentioned. FIG. 9A is a cross-sectional diagram of a glass cover which has been chemically treated such that a chemically strengthened layer is created according to one embodiment. A glass cover 900 includes a chemically strengthened layer 928 and a non-chemically strengthened portion 926. Although the glass cover 900 is, in one embodiment, subjected to chemical strengthening as a whole, the outer surfaces receive the strengthening. The effect of the strengthening is that the non-chemically strengthened portion 926 is in tension, while the chemically strengthened layer 928 is in compression. While glass cover 900 in FIG. 9A is shown as having a rounded edge geometry 902, it should be appreciated that glass cover 900 may generally have any edge geometry, though rounded geometries at edges may allow for increased strengthening of the edges of glass cover 900. Rounded edge geometry 902 is depicted by way of example, and not for purposes of limitation.

FIG. 9B is a cross-sectional diagram of a glass cover which has been chemically treated, as shown to include a chemically treated portion in which potassium ions have been implanted according to one embodiment. Chemically strengthened layer 928 has a thickness (y) which may vary depending upon the requirements of a particular system in which glass cover 900 is to be utilized. Non-chemically strengthened portion 926 generally includes Na⁺ ions 934 but no Alkali metal ions 936. A chemical strengthening process causes chemically strengthened layer 928 to be formed such that chemically strengthened layer 928 includes both Na⁺ ions 934 and Alkali metal ions 936.

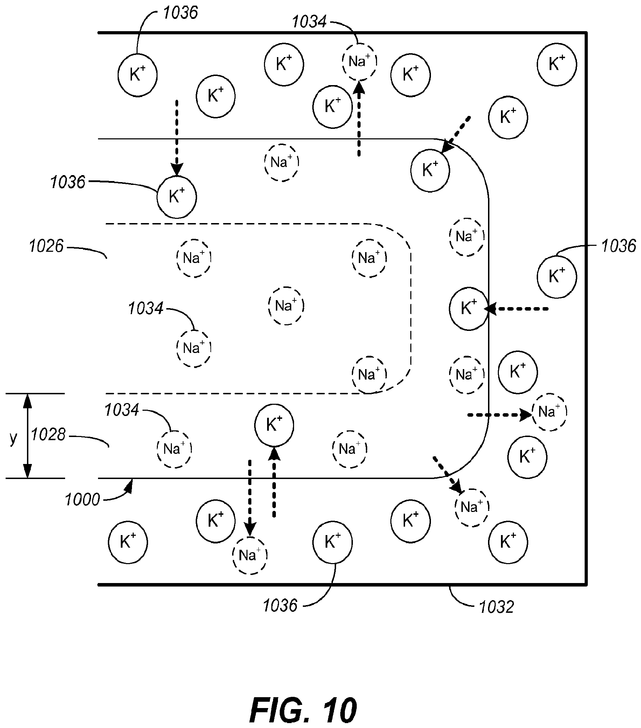

FIG. 10 is a diagrammatic representation of a chemical treatment process that involves submerging a glass cover in an ion bath according to one embodiment. When glass cover 1000, which is partially shown in cross-section, is submerged or soaked in a heated ion bath 1032, diffusion occurs. As shown, Alkali metal ions 1034 which are present in glass cover 1000 diffuse into ion bath 1032 while Alkali metal ions 1036 (e.g., potassium (K)) in ion bath 1032 diffuse into glass cover 1000, such that a chemically strengthened layer 1028 is formed. In other words, Alkali metal ions 1036 from ion bath 1032 can be exchanged with Na⁺ ions 1034 to form chemically strengthened layer 1028. Alkali metal ions 1036 typically would not diffuse into a center portion 1026 of glass cover 1000. By controlling the duration (i.e., time) of a chemical strengthening treatment, temperature and/or the concentration of Alkali metal ions 1036 in ion bath 1032, the thickness (y) of chemically strengthened layer 1028 may be substantially controlled.

The concentration of Alkali metal ions in an ion bath may be varied while a glass cover is soaking in the ion bath. In other words, the concentration of Alkali metal ions in a ion bath may be maintained substantially constant, may be increased, and/or may be decreased while a glass cover is submerged in the ion bath without departing from the spirit or the scope of the present invention. For example, as Alkali metal ions displace Na⁺ ions in the glass, the Na⁺ ions become part of the ion bath. Hence, the concentration of Alkali metal ions in the ion bath may change unless additional Alkali metal ions are added into the ion bath.

The techniques describe herein may be applied to glass surfaces used by any of a variety of electronic devices including but not limited handheld electronic devices, portable electronic devices and substantially stationary electronic devices. Examples of these include any known consumer electronic device that includes a display. By way of example, and not by way of limitation, the electronic device may correspond to media players, mobile phones (e.g., cellular phones), PDAs, remote controls, notebooks, tablet PCs, monitors, all in one computers and the like.

The various aspects, features, embodiments or implementations of the invention described above can be used alone or in various combinations.

Additional details on strengthening edges of glass articles and/or different chemical baths can be found in: (i) U.S. Provisional Patent Application No. 61/156,803, filed March 2, 2009 and entitled "TECHNIQUES FOR STRENGTHENING GLASS COVERS FOR PORTABLE ELECTRONIC DEVICES", which is herein incorporated by reference; (ii) International Patent Application No. PCT/US2010/025979, filed March 2, 2010 and entitled "Techniques for Strengthening Glass Covers for Portable Electronic Devices", which is herein incorporated by reference; (iii) U.S. Provisional Patent Application No. 61/374,988, filed August 18, 2010, and entitled "ENHANCED GLASS STRENGTHING OF GLASS", which is hereby incorporated herein by reference; (iv) U.S. Patent Application No. 12/895,823, filed September 30, 2010 and entitled "ENHANCED STRENGTHENING OF GLASS"; (v) U.S. Patent Application No. 12/895,372, filed September 30, 2010 and entitled "TECHNIQUES FOR STRENGTHENING GLASS COVERS FOR PORTABLE ELECTRONIC DEVICES", which is herein incorporated by reference; (vi) U.S. Patent Application No. 12/895,393, filed September 30, 2010 and entitled "TECHNIQUES FOR STRENGTHENING GLASS COVERS FOR PORTABLE ELECTRONIC DEVICES", which is herein incorporated by reference; and (vii) U.S. Provisional Patent Application No. 61/301,585, filed February 4, 2010 and entitled "TECHNIQUES FOR STRENGTHENING GLASS COVERS FOR PORTABLE ELECTRONIC DEVICES," which is hereby incorporated herein by reference.

Although only a few embodiments of the invention have been described, it should be understood that the invention may be embodied in many other specific forms without departing from the spirit or the scope of the present invention. By way of example, the steps associated with the methods of the invention may vary widely. Steps may be added, removed, altered, combined, and reordered without departing from the spirit of the scope of the invention. Similarly, while operations are depicted in the drawings in a particular order, this should not be understood as requiring that such operations be performed in the particular order shown or in sequential order, or that all illustrated operations be performed, to achieve desirable results.

While this specification contains many specifics, these should not be construed as limitations on the scope of the disclosure or of what may be claimed, but rather as descriptions of features specific to particular embodiment of the disclosure. Certain features that are described in the context of separate embodiments can also be implemented in combination. Conversely, various features that are described in the context of a single embodiment can also be implemented in multiple embodiments separately or in any suitable subcombination. Moreover, although features may be described above as acting in certain combinations, one or more features from a claimed combination can in some cases be excised from the combination, and the claimed combination may be directed to a subcombination or variation of a subcombination.

While this invention has been described in terms of several embodiments, there are alterations, permutations, and equivalents, which fall within the scope of this invention. It should also be noted that there are many alternative ways of implementing the methods and apparatuses of the present invention. It is therefore intended that the following appended claims be interpreted as including all such alterations, permutations, and equivalents as fall within the true spirit and scope of the present invention.

## Claims

1. A method for processing a piece of glass to improve its strength, said method comprising:
obtaining a piece of glass that is to be chemically strengthened;
inducing a temporary mechanical stress on the piece of glass; and
chemically strengthening the piece of glass at least while the temporary mechanical stress is induced on the piece of glass;
wherein the temporary mechanical stress is dynamically induced on at least a portion of the piece of glass while the piece of glass is being chemically strengthened.

2. A method as recited in claim 1, wherein the chemically strengthening of the piece of glass comprises:
placing the piece of glass in a potassium solution; and
subsequently placing the piece of glass in a sodium solution after removal of the piece of glass from the potassium solution.

3. A method as recited in claim 1, wherein the piece of glass has a thickness within a range of about 0.3 mm to 5.0 mm.

4. A method as recited in claim 1, wherein the chemically strengthening of the piece of glass comprises placing the piece of glass in a potassium solution.

5. A method as recited in claim 1, wherein the temporary mechanical stress is induced on at least one edge region of the piece of glass.

6. A method as recited in claim 1,
wherein the piece of glass is a glass piece,
wherein the chemically strengthening of the piece of glass comprises:
securing the glass piece to a stress-inducing fixture;
submerging the stress-inducing fixture having the glass piece secured therein in a heated Alkali metal bath;
determining whether the glass piece should be removed from the heated Alkali metal bath;
removing the glass piece from the heated Alkali metal bath if determined that the glass piece should be removed from the heated Alkali metal bath; and
subsequently removing the glass piece from the stress-inducing fixture.

7. A method as recited in claim 6, wherein the method further comprises:
performing post-processing on the glass piece following removal of the glass piece from the heated Alkali metal bath and the stress-inducing fixture.

8. A method as recited in claim 6 or claim 7, wherein the securing of the glass piece to the stress-inducing fixture holds the glass piece via edges of the glass piece.

9. A method as recited in any of claims 6 to 8, wherein the method further comprises:
attaching the glass piece to a portable electronic device, the glass piece serving as a portion of an outer surface of a housing of the portable electronic device.

10. A method as recited in claim 7, wherein the method further comprises:
submerging the glass piece in a heated sodium bath after removal of the glass piece from the heated Alkali metal bath and prior to performing the post-processing; and
determining whether the glass piece should be removed from the heated sodium bath.

11. A glass strengthening system for glass articles, comprising:
a stress fixture serving to induce a dynamic mechanical stress on at least a portion of a glass article; and
a bath station providing an Alkali metal solution, the bath station serving to receive the stress fixture having the glass article and then serving to facilitate exchange of Alkali metal ions within the bath station for sodium ions within the glass article while the stress fixture is inducing a dynamic mechanical stress on the glass article.

12. A glass strengthening system as recited in claim 11, wherein the glass strengthening system comprises:
a subsequent bath station providing a sodium solution, the subsequent bath station serving to receive the glass article following the bath station and to re-introduce sodium ions for Alkali metal ions into surfaces of the glass article.

13. A method as recited in any of claims 1 to 10, wherein the glass piece has a thickness of not more than about 1.0 mm.

## Patentansprüche

1. Verfahren zum Bearbeiten eines Glasstücks zur Verbesserung seiner Festigkeit, wobei das Verfahren umfasst:
Erhalten eines Glasstücks, das chemisch verstärkt werden soll;
Hervorrufen einer vorübergehenden mechanischen Belastung an dem Glasstück; und
chemisches Verstärken des Glasstücks, zumindest während die vorübergehende mechanische Belastung auf das Glasstück ausgeübt wird;
wobei die vorübergehende mechanische Belastung dynamisch auf mindestens einen Teil des Glasstückes ausgeübt wird, während das Glasstück chemisch verstärkt wird.

2. Verfahren nach Anspruch 1, wobei das chemische Verstärken des Glasstücks umfasst:
Platzieren des Glasstücks in eine Kaliumlösung; und
anschließend Platzieren des Glasstücks in eine Natriumlösung, nachdem das Glasstück aus der Kaliumlösung entfernt wurde.

3. Verfahren nach Anspruch 1, wobei das Glasstück eine Dicke in einem Bereich von etwa 0,3 mm bis 5,0 mm aufweist.

4. Verfahren nach Anspruch 1, wobei das chemische Verstärken des Glasstücks das Platzieren des Glasstücks in eine Kaliumlösung umfasst.

5. Verfahren nach Anspruch 1, **dadurch gekennzeichnet, dass** die vorübergehende mechanische Belastung an mindestens einem Randbereich des Glasstücks induziert wird.

6. Verfahren nach Anspruch 1, wobei das Glasstück ein Glasstück ist,
wobei die chemische Verstärkung des Glasstücks umfasst:
Befestigen des Glasstücks an einer belastungsinduzierenden Befestigung;
Eintauchen der belastungsinduzierenden Befestigung mit dem darin befestigten Glasstück in eine erwärmte Alkalimetallbad;
Bestimmen, ob das Glasstück aus dem erwärmten Alkalimetallbad entfernt werden sollte;
Entfernen des Glasstücks aus dem erwärmten Alkalimetallbad, wenn bestimmt wird, dass das Glasstück aus dem erwärmten Alkalimetallbad entfernt werden sollte; und
anschließendes Entfernen des Glasstücks von der spannungsinduzierenden Befestigung.

7. Verfahren nach Anspruch 6, wobei das Verfahren ferner umfasst:
Durchführen einer Nachbearbeitung auf dem Glasstück nach dem Entfernen des Glasstücks aus dem erwärmten Alkalimetallbad und der belastungsinduzierenden Befestigung.

8. Verfahren nach Anspruch 6 oder Anspruch 7, wobei das Befestigen des Glasstücks an der belastungsinduzierenden Befestigung das Glasstück über Kanten des Glasstücks hält.

9. Verfahren nach einem der Ansprüche 6 bis 8, wobei das Verfahren ferner umfasst:
Befestigen des Glasstücks an einer tragbaren elektronischen Vorrichtung, wobei das Glasstück als ein Abschnitt einer Außenfläche eines Gehäuses der tragbaren elektronischen Vorrichtung dient.

10. Verfahren nach Anspruch 7, wobei das Verfahren ferner umfasst:
Eintauchen des Glasstücks in ein erwärmtes Natriumbad nach dem Entfernen des Glasstücks aus dem erwärmten Alkalimetallbad und vor dem Durchführen der Nachbearbeitung; und
Bestimmen, ob das Glasstück aus dem erwärmten Natriumbad entfernt werden sollte.

11. Glasverstärkungssystem für Glasartikel, umfassend:
eine Belastungsbefestigung, die dazu dient, eine dynamische mechanische Belastung an mindestens einem Teil eines Glasartikels zu induzieren; und
eine Badstation, die eine Alkalimetalllösung bereitstellt, wobei die Badstation dazu dient, die Belastungsbefestigung mit dem Glasartikel aufzunehmen und dann dazu dient, den Austausch von Alkalimetallionen innerhalb der Badstation gegen Natriumionen innerhalb des Glasartikels zu erleichtern, während die Belastungsbefestigung eine dynamische mechanische Belastungs auf den Glasartikel induziert.

12. Glasverstärkungssystem nach Anspruch 11, wobei das Glasverstärkungssystem umfasst:
eine nachfolgende Badstation, die eine Natriumlösung bereitstellt, wobei die nachfolgende Badstation dazu dient, den Glasartikel im Anschluss an die Badstation aufzunehmen und Natriumionen für Alkalimetallionen wieder in Oberflächen des Glasartikels einzuführen.

13. Verfahren nach einem der Ansprüche 1 bis 10, wobei das Glasstück eine Dicke von nicht mehr als etwa 1,0 mm aufweist.

## Revendications

1. Procédé de traitement d'une pièce de verre destiné à améliorer sa résistance mécanique, ledit procédé comprenant :
l'obtention d'une pièce de verre destinée à subir un renforcement chimique ;
la génération d'une contrainte mécanique temporaire sur la pièce de verre ; et
le renforcement chimique de la pièce de verre, au moins pendant que la contrainte mécanique temporaire est engendrée sur la pièce de verre ;
dans lequel la contrainte mécanique temporaire est dynamiquement engendrée sur au moins une partie de la pièce de verre, pendant que la pièce de verre subit le renforcement chimique.

2. Procédé selon la revendication 1, dans lequel le renforcement chimique de la pièce de verre comprend :
la mise en place de la pièce de verre dans une solution de potassium ; et
puis la mise en place de la pièce de verre dans une solution de sodium après que la pièce de verre a été retirée de la solution de potassium.

3. Procédé selon la revendication 1, dans lequel la pièce de verre présente une épaisseur comprise dans la plage d'environ 0,3 mm à 5,0 mm.

4. Procédé selon la revendication 1, dans lequel le renforcement chimique de la pièce de verre comprend la mise en place de la pièce de verre dans une solution de potassium.

5. Procédé selon la revendication 1, dans lequel la contrainte mécanique temporaire est engendrée sur au moins une région de bord de la pièce de verre.

6. Procédé selon la revendication 1,
dans lequel la pièce de verre est une vitre,
dans lequel le renforcement chimique de la pièce de verre comprend
l'assujettissement de la pièce de verre à un appareil générateur de contrainte ;
l'immersion, dans un bain d'un métal alcalin chauffé, du dispositif générateur de contrainte auquel est assujettie la vitre ;
la détermination si la vitre doit ou non être retirée du bain de métal alcalin chauffé ;
le retrait de la vitre du bain de métal alcalin chauffé s'il a été déterminé que la vitre doit être retirée du bain de métal alcalin chauffé ; et
le retrait ensuite de la vitre de l'appareil générateur de contrainte.

7. Procédé selon la revendication 6, le procédé comprenant en outre la mise en oeuvre d'un post-traitement sur la vitre, après que la vitre a été retirée du bain d'un métal alcalin chauffé et de l'appareil générateur de contrainte.

8. Procédé selon la revendication 6 ou 7, dans lequel l'assujettissement de la vitre à l'appareil générateur de contrainte maintient la vitre par des bords de la vitre.

9. Procédé selon l'une des revendications 6 à 8, dans lequel le procédé comprend en outre la fixation de la vitre à un dispositif électronique portable, la vitre faisant fonction de partie d'une surface extérieure d'un boîtier du dispositif électronique portable.

10. Procédé selon la revendication 7, dans lequel le procédé comprend en outre :
l'immersion de la vitre dans un bain de sodium chauffé après que la vitre a été retirée du bain du métal alcalin chauffé et avant mise en oeuvre du post-traitement ; et
la détermination si la vitre doit ou non être retirée du bain de sodium chauffé.

11. Système de renforcement du verre destiné à des articles de verre, comprenant :
un dispositif générateur de contrainte, destiné à engendrer une contrainte mécanique dynamique sur au moins une partie d'un article de verre ; et
une station formant bain apportant une solution d'un métal alcalin, la station formant bain étant destinée à recevoir le dispositif générateur de contrainte contenant l'article de verre, puis à faciliter l'échange des ions de métaux alcalins à l'intérieur de la station formant bain par des ions sodium à l'intérieur de l'article de verre, tandis que le dispositif générateur de contrainte génère une contrainte mécanique dynamique sur l'article de verre.

12. Système de renforcement de verre selon la revendication 11, dans lequel le système de renforcement de verre comprend :
une station aval formant bain apportant une solution de sodium, la station aval formant bain étant destinée à recevoir l'article de verre après la station formant bain, et à réintroduire des ions sodium en remplacement d'ions de métaux alcalins dans les surfaces de l'article de verre.

13. Procédé selon l'une des revendications 1 à 10, dans lequel la vitre présente une épaisseur non supérieure à environ 1,0 mm.
